# EUROPEAN PATENT APPLICATION

(11) **EP 4 835 821 A1**
(43) Date of publication of application: **04.11.2026**
(21) Application number: 25305625.3
(22) Date of filing: 30.04.2025
(51) Int. Cl.: G06T 9/00, G06N 3/045, H04N 19/17, H04N 19/33, H04N 19/46

(54) **PROGRESSIVE DATA RECONSTRUCTION USING A HIERARCHICAL INR NETWORK**

(71) Applicant: InterDigital CE Patent Holdings, SAS, 75017 Paris (FR)
(72) Inventor: LE MEUR, Olivier, 35160 TALENSAC (FR); SCHNITZLER, Francois, 56890 SAINT AVE (FR); LAMBERT, Anne, 35250 SAINT-AUBIN-D'AUBIGNE (FR); CHEN, Ya, 35700 RENNES (FR); GALPIN, Franck, 35235 THORIGNE-FOUILLARD (FR); LO BIANCO, Federico, 35700 RENNES (FR); DAMODARAN, Bharath Bhushan, 56000 VANNES (FR)
(74) Representative: Vossius & Partner Patentanwälte Rechtsanwälte mbB

(57) **Abstract**

Apparatuses and methods are disclosed for encoding and decoding data. The encoding includes training a hybrid INR network to produce a data region (being encoded) from layers of latent variables. For each layer, the training includes determining, based on a respective coding cost, latent variables of the layer and one or more networks associated with the layer. Following training, the encoding includes, for at least one layer, coding into the bitstream latent variables of the layer and parameters of one or more networks associated with the layer as well as information indicating a reconstruction level. The decoding includes decoding from the bitstream the information indicating a reconstruction level, the layers of latent variables, and for each layer, the parameters of one or more networks associated with the layer. A maximum level of resolution is determined based on the information indicating a reconstruction level. Then, for one or more active layers (being layers with respective resolution levels that are up to the maximum level of resolution), the data region is produced from the decoded latent variables of active layers by the hybrid INR network using the decoded parameters of one or more networks associated with each of the active layers.

## Description

### BACKGROUND

A Hybrid INR network is trained to predict data based on latent variables arranged in hierarchical layers. These layers of latent variables are learned together, as well as parameters of various networks employed by the hybrid INR network, to represent the data as a whole. However, data capturing real-world or computer-generated scenes typically contain contents at different levels of detail, representable by data components at multiple resolution levels. And so, learning latent variables and network parameters to predict given data by directly targeting the data's contents at the different resolution levels may improve reconstruction performance. Furthermore, such learning can facilitate a partial or a progressive reconstruction of the data, the extent of which can be determined by the encoder based on the nature of the data or by the decoder based on its processing capacity.

### SUMMARY

Aspects disclosed in the present disclosure describe methods for encoding data. These methods involve encoding, into a bitstream, a data region of a currently encoded frame. The encoding includes training a hybrid INR network to produce the data region from layers of latent variables. For each layer, the training includes determining, based on a respective coding cost, latent variables of the layer and one or more networks associated with the layer. Following training, the encoding includes, for at least one layer, coding into the bitstream latent variables of the layer and parameters of one or more networks associated with the layer. Information indicating a reconstruction level is also coded into the bitstream.

Aspects disclosed in the present disclosure also describe methods for decoding data. These methods involve decoding, from a bitstream, a data region of a currently decoded frame. The decoding includes decoding from the bitstream information indicating a reconstruction level. The decoding further includes decoding from the bitstream layers of latent variables, and for each layer, parameters of one or more networks associated with that layer. A maximum level of resolution is determined based on the information indicating a reconstruction level. Then, for one or more active layers (that is, layers with respective resolution levels that are up to the determined maximum level of resolution) the data region is produced from the decoded latent variables of each of the active layers by a hybrid INR network using the decoded parameters of one or more networks associated with each of the active layers.

Aspects disclosed in the present disclosure describe apparatuses for encoding data. The apparatuses comprise at least one processor and memory storing instructions. The instructions, when executed by the at least one processor, cause the apparatuses to encode, into a bitstream, a data region of a currently encoded frame. The encoding includes training a hybrid INR network to produce the data region from layers of latent variables. For each layer, the training includes determining, based on a respective coding cost, latent variables of the layer and one or more networks associated with the layer. Following training, the encoding includes, for at least one layer, coding into the bitstream latent variables of the layer and parameters of one or more networks associated with the layer. Information indicating a reconstruction level is also coded into the bitstream.

Aspects disclosed in the present disclosure also describe apparatuses for decoding data. The apparatuses comprise at least one processor and memory storing instructions. The instructions, when executed by the at least one processor, cause the apparatuses to decode, from a bitstream, a data region of a currently decoded frame. The decoding includes decoding from the bitstream information indicating a reconstruction level. The decoding further includes decoding from the bitstream layers of latent variables, and for each layer, parameters of one or more networks associated with that layer. A maximum level of resolution is determined based on the information indicating a reconstruction level. Then, for one or more active layers (that is, layers with respective resolution levels that are up to the determined maximum level of resolution) the data region is produced from the decoded latent variables of each of the active layers by a hybrid INR network using the decoded parameters of one or more networks associated with each of the active layers.

Aspects disclosed in the present disclosure describe a non-transitory computer-readable medium comprising instructions executable by at least one processor to perform methods for encoding data. These methods involve encoding, into a bitstream, a data region of a currently encoded frame. The encoding includes training a hybrid INR network to produce the data region from layers of latent variables. For each layer, the training includes determining, based on a respective coding cost, latent variables of the layer and one or more networks associated with the layer. Following the training, the encoding includes, for at least one layer, coding into the bitstream latent variables of the layer and parameters of one or more networks associated with the layer. Information indicating a reconstruction level is also coded into the bitstream.

Aspects disclosed in the present disclosure also describe a non-transitory computer-readable medium comprising instructions executable by at least one processor to perform methods for decoding data. These methods involve decoding, from a bitstream, a data region of a currently decoded frame. The decoding includes decoding from the bitstream information indicating a reconstruction level. The decoding further includes decoding from the bitstream layers of latent variables, and for each layer, parameters of one or more networks associated with that layer. A maximum level of resolution is determined based on the information indicating a reconstruction level. Then, for one or more active layers (that is, layers with respective resolution levels that are up to the determined maximum level of resolution) the data region is produced from the decoded latent variables of each of the active layers by a hybrid INR network using the decoded parameters of one or more networks associated with each of the active layers.

This Summary is provided to introduce a selection of concepts in a simplified form that is further described below in the Detailed Description. This Summary is not intended to identify key features or essential features of the claimed subject matter, nor is it intended to be used to limit the scope of the claimed subject matter. Furthermore, the claimed subject matter is not limited to limitations that solve any or all disadvantages noted in any part of this disclosure.

### BRIEF DESCRIPTION OF THE DRAWINGS

FIG. 1 is a block diagram of an example system, according to which aspects of the present embodiments can be implemented.
FIG. 2 is a diagram illustrating an example INR network, according to which aspects of the present embodiments can be implemented.
FIG. 3 is a block diagram of an example video encoder, according to which aspects of the present embodiments can be implemented.
FIG. 4 is a block diagram of an example video decoder, according to which aspects of the present embodiments can be implemented.
FIG. 5 is a diagram illustrating a hybrid INR network, according to which aspects of the present embodiments can be implemented.
FIG. 6 is a block diagram illustrating an example video encoder applying a hybrid INR network, according to which aspects of the present embodiments can be implemented.
FIG. 7 is a block diagram illustrating an example video decoder applying a hybrid INR network, according to which aspects of the present embodiments can be implemented.
FIG. 8 is a block diagram illustrating the prediction of a latent variable distribution using a spatial context, according to which aspects of the present embodiments can be implemented.
FIG. 9 is a block diagram illustrating a first configuration of a hierarchical INR network, according to which aspects of the present embodiments can be implemented.
FIG. 10 is a block diagram illustrating a second configuration of a hierarchical INR network, according to which aspects of the present embodiments can be implemented.
FIG. 11 is a flowchart of an example method for encoding data, according to which aspects of the present embodiments can be implemented.
FIG. 12 is a flowchart of an example method for decoding data, according to which aspects of the present embodiments can be implemented.

### DETAILED DESCRIPTION

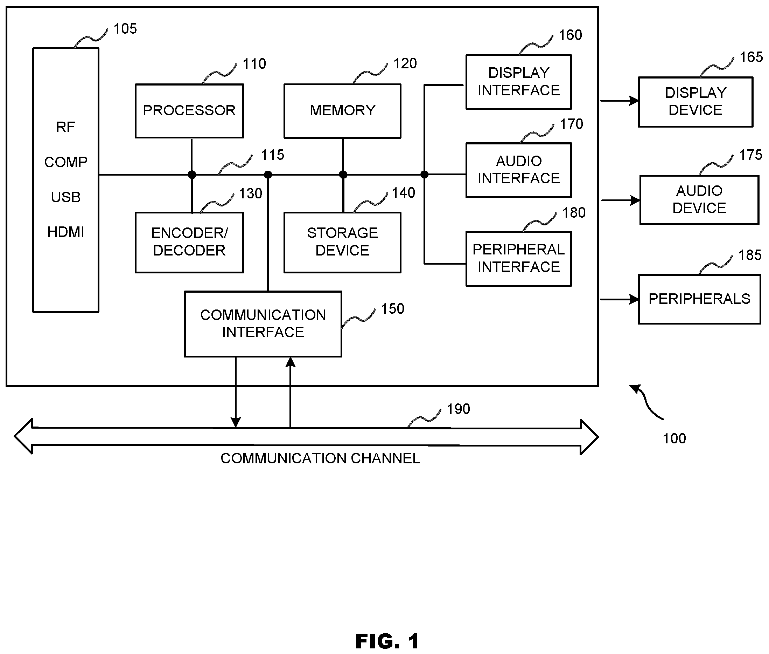

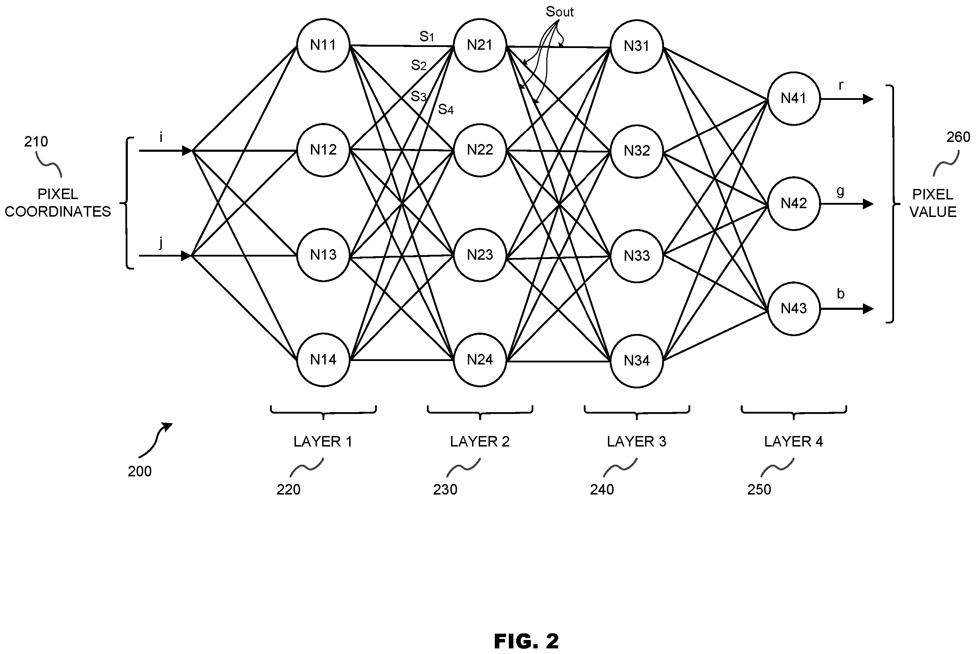

Apparatuses and methods are described herein for encoding and decoding data applying a hybrid INR network. A system for processing and displaying content, with which various aspects and examples described herein may be implemented, is generally described in reference to FIG. 1, followed by a description of the aspects of the present disclosure in reference to FIGS. 2-12.

FIG. 1 is a block diagram of an example system, according to which aspects of the present embodiments can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 includes at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 includes at least one memory 120, for example, a volatile memory device and/or a non-volatile memory device. The system 100 includes a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 includes an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 is used to store instructions and/or provide working memory for video encoding and decoding functions. In some embodiments, memory external to the processor 110 and/or the encoder/decoder module 130 (e.g., the memory 120 and/or the storage device 140) is used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or **HDMI** inputs may include respective interface processors and transceivers (or transmitters and receivers) for coupling the system 100 to other devices via USB and/or **HDMI** ports or connections. Various forms of input processing may be implemented, for example, by and/or within a separate input processing device or the processor 110.

The system 100 includes a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

Generally, video codecs can be classified into conventional codecs, autoencoders, and overfitted codecs. Conventional codecs, currently the most common ones, are based on predictive coding, such as those following the advance video coding (H.264/AVC), the high efficiency video coding (HEVC), or the versatile video coding (VVC) standards. In contrast, an autoencoder is a neural network that is trained to map input images (video frames) into respective sets of latent variables and then map back those sets of latent variables to approximate versions of the input images. During training, the autoencoder parameters are optimized to minimize a rate-distortion cost function. Thus, using a trained autoencoder, encoding an image involves mapping the image into a set of latent variables and decoding the image involves mapping that set of latent variables into a reconstructed version of the image. Since autoencoders are generically trained (that is, their training is based on a large number of images), to compete with the performance of conventional codecs, for example, their complexity (the number of parameters and multiplications involved per pixel) is high. Relative to autoencoders, overfitted codecs, using INR networks, offer lower complexity while still achieving the performance levels of conventional codecs.

Representing data via INR networks is a relatively new technology that has only recently been investigated by the computer vision and computer graphics communities. INR networks are studied for applications of compression, where an efficient representation of signals (such as, still images, videos, surfaces, and volumes) is required. In contrast to an autoencoder, an INR network is trained to represent a specific signal. Hence, unlike autoencoders, an INR-based codec is not generic but is adapted (overfitted) to the signal to be coded and is, therefore, more efficient. Moreover, since the INR network is trained to predict a signal based on the signal's coordinates, the trained network can be applied to progressively reconstruct the signal based on any set of coordinates (e.g., a subset of the coordinates used in the training, or any other set of extrapolated or interpolated coordinates therefrom). For the simplicity of the presentation, aspects of INR network applications are described herein with respect to images (e.g., video frames); however, these aspects are extendable to other data frames, such as those representing surfaces of objects and volumetric data that may be changing overtime.

FIG. 2 is a diagram illustrating an example INR network 200. An INR network is a neural network composed of multiple layers, each layer includes multiple nodes (denoted by circles). Generally, the architecture of a neural network is characterized by the number of layers, the number of layers' nodes, and by the way the layers' nodes are connected. In the example of FIG. 2, the network 200 has four layers 220, 230, 240, 250 that are fully connected. For example, the first layer 220 includes four nodes N11, N12, N13, and N14 that each receives the coordinate values (*i, j*) 210 of a pixel x and each outputs an output signal that, in turn, feeds the nodes of the next layer, N21, N22, N23, and N24. Likewise, the second layer 230 includes four nodes N21, N22, N23, and N24, that each receives the output signals of nodes from the previous layer, N11, N12, N13, and N14, and each outputs an output signal that, in turn, feeds the nodes of the next layer, N31, N32, N33, and N34. The fourth layer 250 includes three nodes N41, N42, and N43 that each receives the output signals of the nodes from the previous layer, N31, N32, N33, N34 and each outputs a color component value 260 of the pixel x, respectively, *r, g,* and b (or color component values of any other color model, such as *y, u,* and *v).*

Each node in the network 200 represents an operator that generates an output signal based on the node's inputs. For example, node N21 of the second layer 230 receives as an input the output signals of nodes N11, N12, N13, and N14, respectively, *s*₁, *s*₂, *s*₃, and *s*₄. These inputs are translated into an output signal *sₒᵤₜ* that feeds the nodes of the third layer 240. A node's operator can be expressed as follows: ${s}_{out} = A \left({p}_{0}+{\sum }_{i = 1}^{L} {p}_{i} ⋅ {s}_{i}\right) ,$ (1) where, L denotes the number of input signals (i.e., the number of nodes from the previous layer that connect to the node), *s =* {*sᵢ* : *i* = 1 *to L}* denotes the node's input signal vector, *sₒᵤₜ* denotes the node's output signal, p = {*pᵢ* : *i* = 0 *to L}* denotes the node's parameter vector (or weight vector), and A denotes an activation function (e.g., ReLU, Sigmoid, or Tanh). The weight vectors (and parameters of the activation functions, if such parameters exist) of respective nodes are collectively referred to as the parameters *θ* of the network 200. These parameters *θ* are determined through a training process. The network operation, denoted by *f_{θ},* is therefore defined by the network parameters *θ*.

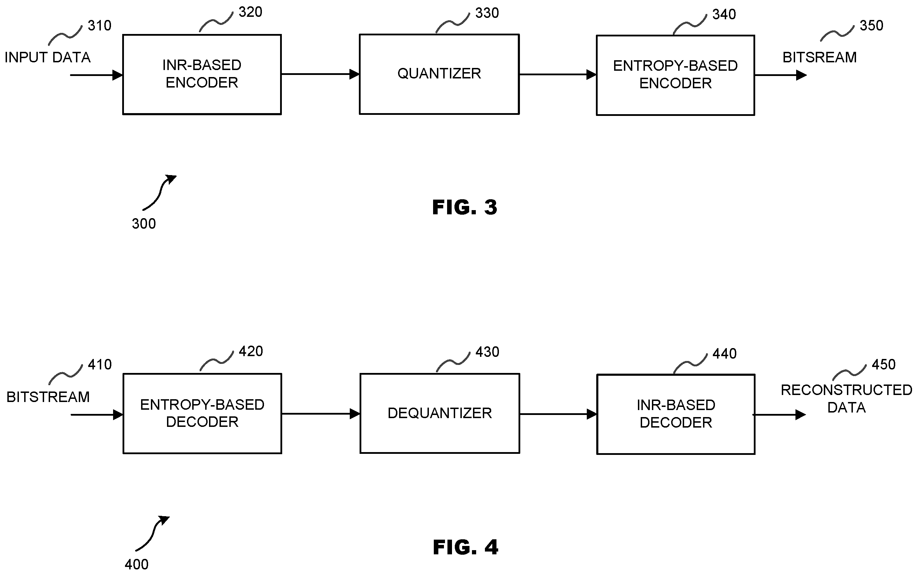

Hence, an INR network 200 is trained to predict a pixel value of an image, ***x***(*i, j*), based on the pixel's coordinates *(i,j)* - that is, *f_{θ}*(*i, j*) *=* (*r*, *g*, *b)* (or *f_{θ}*(*i*, *j*) *= (y, u, v)).* During a training phase of an INR network 200, the parameters *θ* (or a subset of them) are determined. This is done via an optimization process through which the parameters *θ* that minimize a cost function can be determined. For example, the following cost function can be used: $Cost = D \left(x, {f}_{θ}\right) + λR \left(θ\right)$ (2) where, *D* is a distortion, measuring the fidelity of the estimated pixel values, provided by *f_{θ},* relative to the ground truth, that is, the corresponding pixel values from the original image, denoted by x. And, where R is the resulting bitrate of the encoded parameters *θ* (e.g., encoded by quantization and entropy coding as discussed with respect to FIG. 3). A trade-off parameter *λ* can be set to determine the balance between *D* and R. Note that the distortion *D* can be any metric that measure the distance (or similarity) between the original image x and its estimated version provided by *f_{θ}*, such as a mean squared error metric or a learned perceptual image patch similarity (LPIPS) metric. For example, a mean squared error metric can be expressed as: ${D}_{MSE} = \frac{1}{WH} {\sum }_{i ∈ W , j ∈ H} {\left(x\left(i, j\right)-{f}_{θ}\left(i, j\right)\right)}^{2} ,$ (3) where, W and *H* are the width and height of the image *x* that the INR network is trained to predict. The optimization of the network parameters *θ*, according to equation (2), is typically performed by a machine learning optimization technique, applying, for example, a batch gradient descent algorithm. Following the training of the hybrid INR network 200 and using the optimal parameters *θ* (obtained via the optimization process), the INR network can be applied to predict a pixel value based on its corresponding coordinate values.

Using INR networks for the application of encoding and decoding images is further described with respect to FIGS. 3 and 4.

FIG. 3 is a block diagram of an example video encoder 300. In the example of FIG. 3, the video encoder 300 includes an INR-based encoder 320, a quantizer 330, and an entropy-based encoder 340. The INR-based encoder 320 receives an input data 310 to be coded. The input data 310 can be data associated with a frame of video (an image), a frame of a surface representation of an object, or a frame of volumetric data. To code the input data 310, the INR-based encoder 320 trains an INR network (e.g., the INR network 200 described herein). Specifically, based on the input data 310, the INR-based encoder 320 optimizes a cost function associated with the function *f_{θ},* representative of the INR network, to determine the optimal network parameters *θ*. For example, for an input image with dimensions W and *H, W* times *H* pairs of pixel coordinates (*i*, *j*) and corresponding pixel values ***x***(*i, j*) can be used to train the INR network according to equation (2). The optimal parameters, generated by the INR-based encoder 320, are then quantized by the quantizer 330, and then the quantized parameters are entropy-coded, by the entropy-based encoder 340, into a bitstream 350. Alternatively, the optimal parameters, generated by the INR-based encoder 320, can be coded using neural compression codecs such as Neural Network Coding (NNC)/ ISO/IEC 15938-17 or MPEG-7 part 17. The bitstream 350 can be used by a decoder to reconstruct the input image 310, as described in reference to FIG. 4.

FIG. 4 is a block diagram of an example video decoder 400. The decoder 400 generally reverses the operation of the encoder 300 of FIG. 3. In the example of FIG. 4, the video decoder 400 includes an entropy-based decoder 420, a dequantizer 430, and an INR-based decoder 440. As illustrated, the decoder 400 receives the bitstream 410, 350 (generated by the encoder 300) and entropy-decodes therefrom the quantized INR network parameters. The dequantizer 430 is then employed to dequantize these quantized INR network parameters, resulting in a restored version of the INR network parameters to be provided to the INR-based decoder 440.

The INR-based decoder 440 applies the trained INR network, defined by the restored INR network parameters, to generate the reconstructed data 450. For example, to decode an input image, the INR-based decoder 440 uses the INR network to predict the value of (or to evaluate *f_{θ}* using the coordinates of) any pixel of the input image. Thus, the decoder 400 can be applied to: 1) reconstruct the whole encoded image 310; 2) to reconstruct only a region of the encoded image; or 3) to progressively reconstruct the encoded image. For example, at the encoder 300, an INR network may be trained to predict pixel values of an image with dimensions W = 256 by *H* = 256 based on the corresponding coordinates. At the decoder 400, pixel values of the image can be predicted by evaluating the trained INR network using: 1) the full coordinate set used for training, including all pairs of i ∈ 0,1, ...,255 and j ∈ 0,1, ...,255; 2) a subset of the full set, including coordinates from a region of the encoded image; or 3) a first subset of the full set, including coordinates that subsample the image (forming a low-resolution version of the encoded image) and then a second subset including the remaining coordinates. Any set of coordinates can be used to predict the corresponding pixel values, for example, in order to interpolate or to extrapolate the encoded image 310.

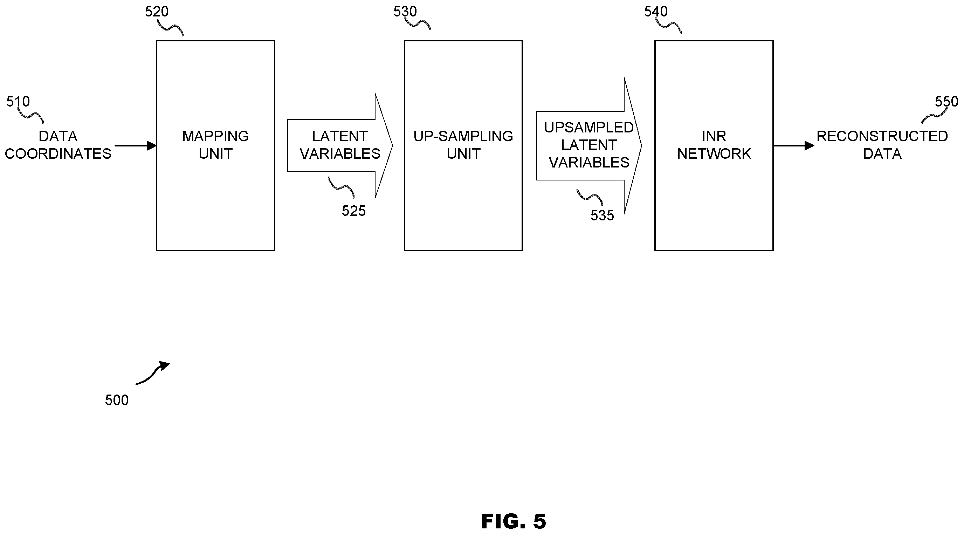

Hybrid INR networks have recently been applied to representing data, including images, videos, 3D objects, and volumetric data, among other applications. In a hybrid INR network, the data coordinates are first mapped into latent variables (or a feature vector). The latent variables are then used as input for the neural network. An example for a hybrid INR network is described in reference to FIG. 5.

FIG. 5 is a diagram illustrating a hybrid INR network 500. In an aspect, this hybrid INR network 500 can be applied by the INR-based encoder 320 of FIG. 3 and the INR-based decoder 440 of FIG. 4. In the example of FIG. 5, during the encoding of input data (that is, the training of the hybrid INR network 500), the input data's coordinates 510 are first mapped, by a mapping unit 520, into latent variables 525. The mapping can be implemented by a lookup table or a hash function, for example. The mapping may also involve any transformation, such as a Fourier transformation, a coordinate transformation, a normalization transformation, or a combination thereof. The obtained latent variables 525 can then be upsampled, by an up-sampling unit 530, resulting in upsampled latent variables 535. The upsampled latent variables are used as an input to an INR network 540 (e.g., such as INR network 200) that is trained to produce the reconstructed data 550. In a hybrid INR network 500 the latent variables 525 can be trained together with the parameters *θ* of the INR network 540, resulting in optimal (learned) network parameters and latent variables. Using such an architecture helps in handling the local attributes of the input data. Indeed, a group of latent variables that correspond to a given region of the data may be uncorrelated with other groups of latent variables that correspond to other regions of the data, and, thus, different groups of latent variables can be tailored to (or be characteristic of) corresponding regions of the data.

Following the training of the hybrid INR network 500 (e.g., by the encoder 320), the learned latent variables 525 and network parameters are quantized (e.g., by the quantizer 330) and coded (e.g., by the entropy-based encoder 340) into the bitstream. Thus, during inference, first the latent variable 525 and the network parameters of the trained INR network 540 are decoded (e.g., by the entropy-based decoder 420) from the bitstream and dequantized (e.g., by the dequantizer 430). Then, the decoded and dequantized latent variables are up-sampled 530. To reconstruct the data 550, the up-sampled latent variables are fed into the trained INR network 540 using the decoded and dequantized network parameters of the INR network.

A hybrid INR network, named a coordinate-based low complexity hierarchical image codec (COOL-CHIC), was proposed by Ladune et al. (see, Ladune et al., "COOL-CHIC: Coordinate-based low complexity hierarchical image codec," International Conference on Computer Vision (ICCV), 2023, hereinafter "Ladune"). In Ladune, the latent variables are arranged in hierarchical layers (or channels) ranging from a low-resolution representation (that provides for compact representation of smooth image regions) to a high-resolution representation (that captures the fine details of the image).

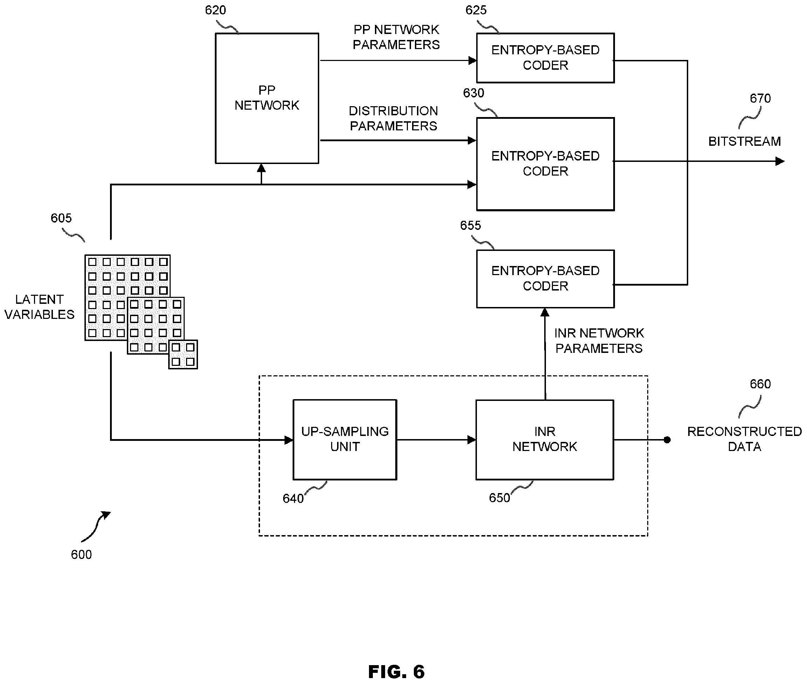

In hybrid INR networks, the latent variables, denoted by y, are typically the largest contributor to the bitrate (several orders of magnitude larger than that contributed by the INR network parameters). One approach to reduce the transmission cost of these latent variables is to entropy code these variables based on their learned distributions, as described in Ladune. Principles of the hybrid INR network proposed in Ladune are described below in reference to FIGS. 6-8.

FIG. 6 is a block diagram illustrating an example video encoder 600 applying a hybrid INR network. The encoder 600 includes a probability prediction (PP) network 620, an up-sampling unit 640, an INR network 650, and entropy-based coders 625, 630, 655. The encoder 600 is configured to process latent variables 605 (e.g., latent variables 525 generated by the mapping unit 520 of FIG. 5). The encoder 600 up-samples, by the up-sampling unit 640, the latent variables. Based on these upsampled latent variables the INR network 650 produces reconstructed data 660 (e.g., a reconstructed image of a video frame). To that end, the hybrid INR network is trained, learning optimal latent variables and INR network parameters so that a coding cost is minimized. The learned INR network parameters *θ* are coded, by the entropy-based coder 655, into the bitstream 670. In addition to the network parameters *θ*, the latent variables need to be coded into the bitstream 670. As further explained below, due to their large bit representation, efficient coding of the latent variables calls for the estimation of their distributions. To achieve coding efficiency therefore, the encoder 600 can be further configured to learn the distributions of respective latent variables using the PP network 620 - that is, a network trained to produce parameters of distributions of respective latent variables. Based on these learned distribution parameters the entropy-based coder 630 codes the latent variables into the bitstream 670. The PP network is defined by PP network parameters, denoted by ψ, determined during the training of the PP network 620. The entropy-based coder 625 codes these PP network parameters into the bitstream 670. Note that in the example of FIG. 6, while the entropy-based coder 630 that codes the latent variables relies on their learned respective distributions, the other entropy-based coders 625, 655 that code the PP network parameters and the INR network parameters may rely on respective non-learned distributions. In an aspect, for some of the latent variables, respective non-learned distributions can be used by the entropy-based coder 630. These non-learned distributions may be fixed distributions or may be distributions that was learned with respect to other latent variables (e.g., latent variables representing data from previous frames or other data regions).

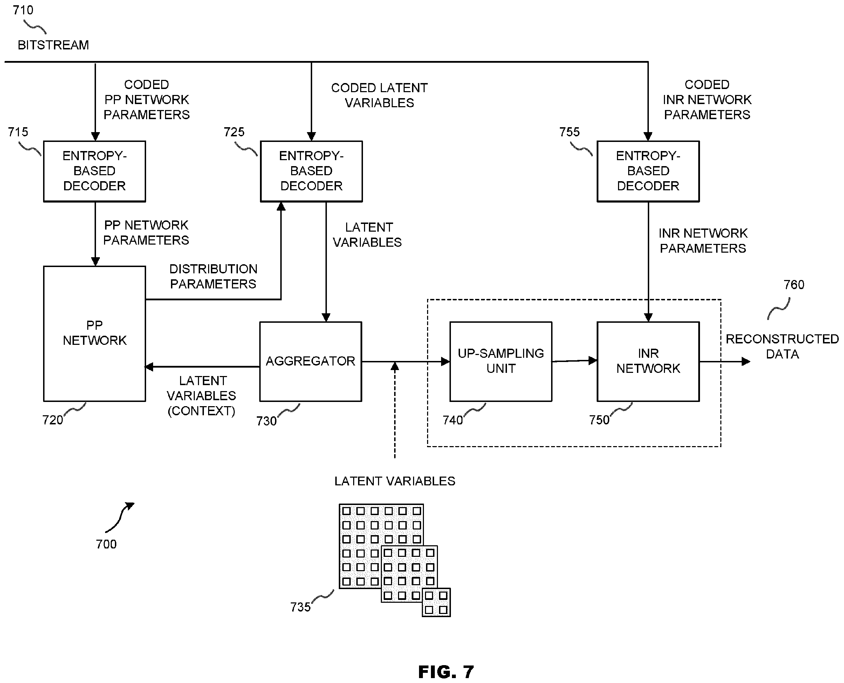

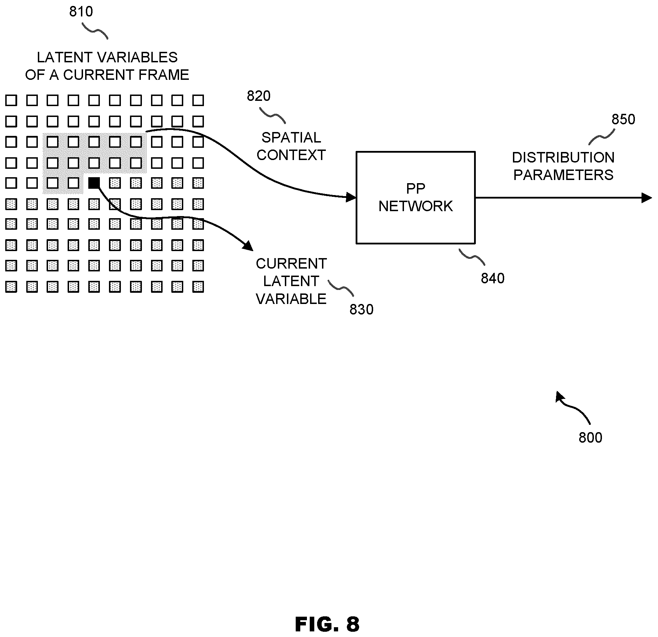

FIG. 7 is a block diagram illustrating an example video decoder applying a hybrid INR network 700. The decoder 700 includes a PP network 720, an aggregator 730, an up-sampling unit 740, an INR network 750, and entropy-based decoders 715, 725, 755. The PP network 720 produces distribution parameters (i.e., distributions) of respective latent variables. The PP network 720 operates based on learned PP network parameters ψ, determined during the training of the PP network 620. The entropy-based decoder 715 decodes these PP network parameters from the bitstream 710. Based on the produced 720 distributions, the entropy-based decoder 725 decodes the latent variables from the bitstream 710. These latent variables are aggregated, by the aggregator 730, forming the layers of the latent variables 735. As shown, already decoded latent variables are provided by the aggregator 730 to the PP network 720 to serve as a context in producing the distribution parameters of the currently decoded 725 latent variable (as further described in reference to FIG. 8). The aggregated latent variables 735 are then upsampled by the up-sampling unit 740. Fed by the up-sampled latent variables, the INR network 750 reconstructs the data 760 (e.g., a reconstructed image of a video frame) it is trained to synthesize based on the INR network parameters, decoded from the bitstream 710 by the entropy-based decoder 755.

The operation of the hybrid INR network is further explained with respect to an image *x* of a video frame, however, *x* may represent other types of data (such as a surface or a volume) that can be associated with a frame. Note that latent variables representative of data regions (e.g., pixels) from a data frame (e.g., a video frame) also correspond to that data frame.

As illustrated, the INR network 650, 750 utilizes a hierarchical representation of latent variables that includes multiple layers of different spatial resolutions 605, 735. Each layer represents an image *x,* of a width W and of a height *H,* with a corresponding level of detail. Formally, the discrete latent variables, denoted by ŷ, can include K layers of latent variables: *ŷ =* {*ŷₖ , k =* 0: *(K -* 1)}. Each layer *ŷₖ* is of width *W*/*2^{k}* and of height *H*/*2^{k}.* During the up-sampling 640, 740, each layer *ŷₖ* may be upsampled by a factor of *2^{k}* (using any interpolation method) to obtain the upsampled layer version, denoted by *ẑₖ* . Together, the upsampled layers, *ẑ* = {*ẑₖ , k =* 0: *(K -* 1)}, result in a dense 3D representation of dimension *W by H* by *K.* Thus, the INR network 650 can be trained based on *W by H* inputs of 2(i, j), where each input can include up to *K* latent variables, that is, *ẑ*(i,j) *=* {*ẑ*(i, j, *k*), *k =* 0: *(K* - 1))}. And the trained INR network 750 can be used to predict a reconstructed pixel ***x̂***(*i, j*), of the original pixel *x(i,j),* based on *ẑ*(i, j), that is, ***x̂***(*i, j*) *= f_{θ}*(*ẑ*(i, j)). In an aspect, depending on the desired bitrate, not all the layers of the latent variables may be used to represent (code) an image *x*.

When compressing an image x, the goal is to do so while minimizing a coding cost, as discussed with respect to equation (2). In the case of a hybrid INR network, the cost of coding an image can be expressed by the following cost function: $Cost = D \left(x,{f}_{θ}\left(\hat{z}\right)\right) + λR \left(\hat{y}, θ, ψ\right) ,$ (4) where *x* denotes an image to be coded of *H* hight, W width, and F color channels; where ŷ denotes the quantized latent variables and *ẑ* denotes their upsampled version; where *f_{θ}* denotes the INR network 650, 750 and *θ* denotes the INR network parameters; where *f*_{ψ} denotes the PP network 620, 720 and ψ denotes the PP network parameters; where D denotes a distortion measuring the distance between the image *x* and its reconstructed version *x̂,* as produced by the INR network *f_{θ}* from the upsampled latent variables *ẑ*, that is, *x̂ = f_{θ}*(*ẑ*); and where R denotes the rate (in bits per pixel) measuring the number of bits that are required to represent a pixel in a bitstream, that is, the number of bits that are required to represent ŷ, *θ*, and ψ. The distortion D and the rate R are balanced by a scalar value denoted by *λ*. In a case where the up-sampling unit 640 is implemented by a neural network, the parameters of that network are also learned and coded into the bitstream 670 to be used by the up-sampling unit 740 when used in an inference mode.

When coding the image x, therefore, the objective is to find these latent variables ŷ, INR network parameters *θ*, and PP network parameters ψ that minimize the coding cost, as follows: ${min}_{\hat{y} , θ , ψ} Cost = {min}_{\hat{y} , θ , ψ} \left(D\left(x,{f}_{θ}\left(\hat{z}\right)\right)+λR\left(\hat{y}, θ, ψ\right)\right) .$ (5) Since the contribution of the INR network parameters *θ* and the PP network parameters ψ to the rate R is not as significant as that of the latent variables ŷ, only the latter can be considered when minimizing the coding cost, that is, *R*(*ŷ*, *θ*, ψ ) ≈ *R*(*ŷ*). Furthermore, *R*(*ŷ*) can be replaced by the cross entropy. Thus, equation (5) can be replaced by: ${min}_{\hat{y} , θ , ψ} Cost = {min}_{\hat{y} , θ , ψ} \left(D\left(x,{f}_{θ}\left(\hat{z}\right)\right)-λ{log}_{2} {P}_{ψ}\left(\hat{y}\right)\right) ,$ (6) where *P*_{ψ}(ŷ) is the joint distribution of the latent variables *ŷ*.

According to Equation (6), minimizing the coding cost involves minimizing the rate associated with the latent variables. This can be achieved by reducing the amount of information contained in the latent variables at the cost of a less accurate reconstruction (as less information in *ŷ* is likely to increase the distortion D). Alternatively, minimizing the coding cost can be achieved by exploiting the distributions of the respective latent variables for their entropy-based coding, as described herein.

Due to the high dimensionality of the latent variables, modeling of the joint distribution of *ŷ*, *P_{ψ}*(*ŷ*), is not tractable. Instead, *P_{ψ}*(*ŷ*) can be factorized as follows: ${P}_{ψ} \left(\hat{y}\right) = {\prod }_{i , j , k} {p}_{ψ} \left(\left.{\hat{y}}_{ijk}\right|{c}_{ijk}^{s}\right) ,$ (7) where ${p}_{ψ} \left(\left.{\hat{y}}_{ijk}\right|{c}_{ijk}^{s}\right)$ denotes a discrete conditional probability of a latent variable at position (i, j, k) conditioned on a corresponding spatial context ${c}_{ijk}^{s}$. Where (i, j) represents the spatial coordinate of a latent variable in a layer *k*. Thus, the rate R can be expressed by $R \left(\hat{y}, θ, ψ\right) = - {\sum }_{ijk} {log}_{2} {p}_{ψ} \left(\left.{\hat{y}}_{ijk}\right|{c}_{ijk}^{s}\right) ,$ (8) And the coding cost, therefore, can be expressed by ${min}_{\hat{y} , θ , ψ} Cost = {min}_{\hat{y} , θ , ψ} \left(D\left(x,{f}_{θ}\left(\hat{z}\right)\right)-λ{\sum }_{ijk} {log}_{2} {p}_{ψ} \left({\hat{y}}_{ijk}\left|{c}_{ijk}^{s}\right.\right)\right) .$ (9)

In practice, the discrete distribution ${p}_{ψ} \left({\hat{y}}_{ijk}\left|{c}_{ijk}^{s}\right.\right)$ can be modeled by integrating the continuous distribution of the non-quantized latent variable. The continuous distribution of the non-quantized latent variable, denoted by *g(y),* can be modeled as a Laplacian distribution, for example. In this case, the PP network 620 learns the expectation parameter, µᵢⱼₖ, and the scale parameter, σᵢⱼₖ, based on the context ${c}_{ijk}^{s}$. Accordingly, the probability of a latent variable *ŷᵢⱼₖ* can be expressed as: ${p}_{ψ} \left({\hat{y}}_{ijk}\left|{c}_{ijk}\right.\right) = {\int }_{{\hat{y}}_{ijk} - 0.5}^{{\hat{y}}_{ijk} + 0.5} g \left(y\right) dy ,$ (10) where g ≅ 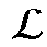 (µᵢⱼₖ, σᵢⱼₖ) denotes a Laplacian distribution. Thus, in the case of a Laplacian distribution, for example, given a context cᵢⱼₖ, the PP network 620 can be trained to produce the corresponding distribution parameters, that is, {µᵢⱼₖ, σᵢⱼₖ} *=* f_{ψ}(cᵢⱼₖ).

Thus, to obtain the distribution ${p}_{ψ} \left({\hat{y}}_{ijk}\left|{c}_{ijk}^{s}\right.\right)$ of a currently processed latent variable *ŷᵢⱼₖ,* the spatial context ${c}_{ijk}^{s}$ may be provided by neighboring latent variables. For example, during the decoding process 700, the PP network 720 produces the distribution ${p}_{ψ} \left({\hat{y}}_{ijk}\left|{c}_{ijk}^{s}\right.\right)$ of a latent variable *ŷᵢⱼₖ* (to be decoded from the bitstream 710 by the entropy-based decoder 725) using spatial context ${c}_{ijk}^{s}$ provided by already decoded neighboring latent variables received from the aggregator 730. Preferably, the neighboring latent variables are selected in a way that enables parallel decoding of the different layers of the latent variables (e.g., in a wavefront-like approach).

FIG. 8 is a diagram illustrating the prediction of a latent variable distribution using a spatial context 800. For the simplicity of the presentation, only one layer 810 of the latent variables is illustrated; however, processes applied to this layer can be similarly applied to the other layers. The example of FIG. 8 illustrates the process of predicting a distribution of a current latent variable (indicated by a black square) to be coded (e.g., by encoder 600) or to be decoded (e.g., by decoder 700). Note that when coding the latent variable, typically, neighboring latent variables from the current frame are available. While when decoding the latent variable, typically, some of the neighboring latent variables from the current frame are not yet available (decoded). This is indicated by the white squares (available latent variables) and the patterned squares (not yet available latent variables).

As illustrated, a spatial context 820 can be constructed based on the latent variables in the spatial neighborhood of the current latent variable 830 - that is, for a current latent variable *ŷᵢⱼₖ* at position (*i*, *j*, *k),* latent variables can be selected within a neighborhood located relative to position (*i*, *j*, *k)* (e.g., latent variables grouped by the gray background in FIG. 8) to form the spatial context ${c}_{ijk}^{s}$. The obtained spatial context, ${c}_{ijk}^{s}$, can then be used by the PP network 840 to predict the distribution of the current latent variable, that is, predicting ${p}_{ψ} \left(\left.{\hat{y}}_{ijk}\right|{c}_{ijk}^{s}\right)$. The distribution of the current latent variable can be predicted by estimating the parameters of that distribution (e.g., {µᵢⱼₖ, σᵢⱼₖ}). To that end, in the encoder 600, the PP network 840, 620 can be trained to produce, for each latent variable, the distribution parameters 850 based on the respective spatial context. This training can be done by minimizing the coding cost expressed in equation (9). The training of the PP network 840, 620 results in the PP network parameters ψ. In the decoder 700, the trained PP network 840, 720 can be operated in an inference mode to produce, for each latent variable, the distribution parameters 850 from the respective spatial context 820. The trained PP network 840, 720 operates based on the PP network parameters ψ determined by the encoder during training and provided to the decoder in the bitstream 710.

In the case of a video stream, for example, a hybrid INR network can be used to represent each image of a video frame by a set of latent variables, ŷ, that (together with the PP network parameters ψ and the INR network parameters θ) can be coded into a bitstream. To decrease the bitrate of the compressed video, the set of latent variables can be trained to represent a group of video frames (see, e.g., Hyunjik et al., "C3: High-Performance and Low-Complexity Neural Compression from a Single Image or Video," Proceedings of the IEEE/CVF Conference on Computer Vision and Pattern Recognition (CVPR), 2024, pp. 9347-9358). However, such an approach makes it difficult to randomly access individual frames at the decoder end. In addressing this shortcoming, Leguay et al. propose a predictive hybrid INR network applicable to individual frames (see, Leguay et al., Cool-chic video: Learned video coding with 800 parameters, Data Compression Conference (DCC) 2024, IEEE, pp 23-32, 2024, hereinafter "Leguay"). Principles of the predictive hybrid INR network proposed in Leguay are described in EP Patent Application 24306384.9, filed on August 21, 2024, the content of which is incorporated herein by reference in its entirety.

To improve performance, a hybrid INR network may be applied to directly learn the different frequency components of the input data. That is, instead of using one INR network 650, multiple INR networks may be used. Each such network can be trained, based on a layer of latent variables, to predict content of the input data that is at a respective level of detail. To that end, the input data may be decomposed (e.g., using Gaussian pyramid-based decomposition or Laplacian pyramid-based decomposition) into a hierarchical representation, including data components at multiple resolution levels, where a data component at the lowest resolution level contain low frequency content and data components at higher resolution levels contain higher frequency contents at an increasing level of detail (i.e., level of resolution). Thus, an input image, *x,* of a video frame (i.e., input data) can be decomposed into *K* levels of resolution, that is, *x =* {*xₖ, k =* 0: *(K -* 1)}, where image *x*_{*K-*1} represents image content at the lowest resolution level and where image *x*₀ represents image content at the highest resolution level. Given this hierarchical representation of the input data, the hybrid INR network can apply dedicated network(s) to predict content associated with image *xₖ* by learning a respective layer of latent variables *ŷₖ* and the parameters of these dedicated network(s). Variants of this approach are described in EP Patent Applications 24306386.4 and 24306560.4, the contents of which are incorporated herein by reference in their entirety.

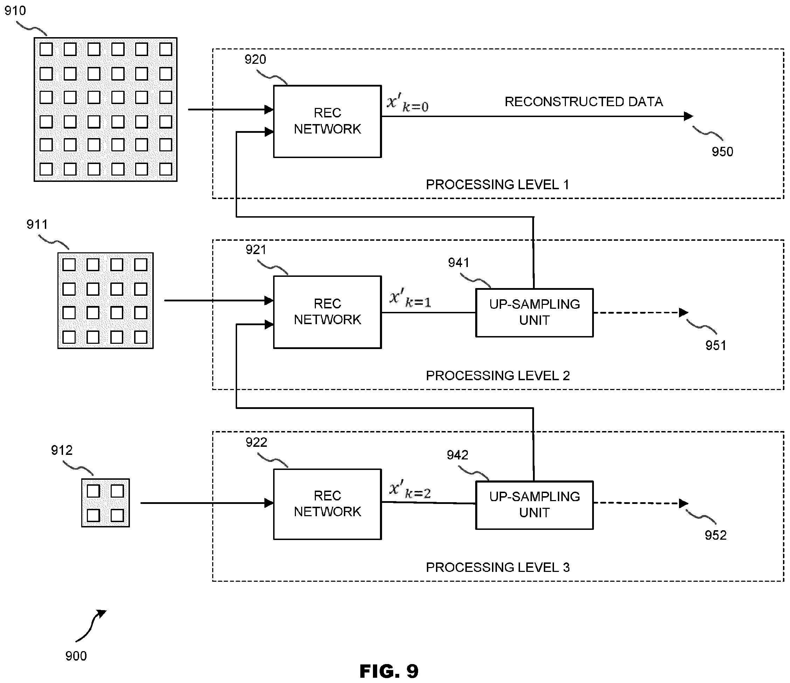

Hybrid INR networks utilizing hierarchical learning and synthesis are further described herein with respect to FIGS. 9-10. For simplicity of the presentation, the hierarchical processing (learning and synthesis) is illustrated herein using three levels of resolution, referred to herein also as levels of processing. However, extending to a higher number of resolution levels is straightforward. Hence, as demonstrated in FIGS. 9-10: processing level 3 stands for processing data at the lowest resolution level (e.g., data indexed by *k = K -* 1); processing level 1 stands for processing data at the highest resolution level (e.g., data indexed by k = 0); and processing level 2 stands for processing data at one or more intermediate resolution levels (e.g., data indexed by *k =* 1 to *k = K -* 2).

FIG. 9 is a block diagram illustrating a first configuration of a hierarchical INR network 900. In an aspect, the hierarchical INR network 900, when in a training phase, replaces the up-sampling unit 640 and the INR network 650 shown in FIG. 6; and, when in an operational phase, replaces the up-sampling unit 740 and the INR network 750 shown in FIG. 7 (as indicated by the dashed-lines). In the example of FIG. 9, processing is performed in increasing level of scale - thus, processing may begin with processing level 3, progress through processing level 2, and end with processing level 1. At a current processing level, a respective layer of latent variables, *ŷₖ*, may be fed into a dedicated network (namely, a reconstruction network) together with an image that was synthesized by a network of a previous processing level, *x'*_{*k*+1}, and was upsampled to the resolution level of the current processing level, denoted *x"*_{*k*+1}. The dedicated network is trained to produce, based on *ŷₖ* and *x"*_{*k*+1}, a reconstruction of *xₖ* , that is, *x'ₖ.*

Specifically, starting with processing level 3, the lowest resolution layer 912 of latent variables, *ŷ*_{*k*=2} , may be fed into reconstruction network 922. This network 922 is trained to predict, based on ŷ*ₖ₌₂*, the input image at the lowest resolution level, *x'*_{*k*=2} . The output of this network, *x'*_{*k*=2} , may be upsampled, by the up-sampling unit 942, to the resolution level of the next processing level 2, resulting in *x"*_{*k*=2} . Continuing with processing level 2, the intermediate resolution layer 911 of latent variables, *ŷ*_{*k*=1} , may be fed into reconstruction network 921. This network 921 is trained to predict, based on *ŷ*_{*k*=1} and *x"*_{*k*=2}, the input image at the intermediate resolution level, *x'*_{*k*=1} . The output of this network 921, *x*'_{*k*=1} , may be upsampled, by the up-sampling unit 941, to a resolution level of the next processing level 1, resulting in *x*"_{*k*=1}. Continuing with processing level 1, the highest resolution layer 910 of latent variables, *ŷ*_{*k*=0} , may be fed into reconstruction network 920. This network 920 is trained to predict, based on *ŷ*_{*k*=0} and *x"*_{*k*=1}, the input image at the full (native) resolution level, *x'*_{*k*=0} *,* that is, the reconstructed image 950. In an aspect, the up-sampling units 941, 942 can be implemented by respective neural networks.

As described above, when training a hybrid INR network, the coding cost is minimized to determine the optimal networks' parameters and latent variables. In the case where a hierarchical INR network 900 is trained, the distortion term D (e.g., used in equation (4)) may be expressed as follows: $D = {\sum }_{k = 0}^{K - 2} {D}_{k} \left({x}_{k},{f}_{{θ}_{k}}\left({\hat{y}}_{k},x{"}_{k + 1}\right)\right) + {D}_{K - 1} \left({x}_{K - 1},{f}_{{θ}_{K - 1}}\left({\hat{y}}_{K - 1}\right)\right) ,$ (11) where *ŷₖ* denotes latent variables of layer *k* (e.g., 911); where *xₖ* denotes the original image (ground truth) at a resolution level *k*, provided by a hierarchical decomposition of the original image x (e.g., using a Gaussian pyramid-based decomposition); where *x*"_{*k*+1} denotes a prediction of the input image at resolution level k + 1, provided by the up-sampling unit of a lower processing level (e.g., 942); and where *f_{θₖ}* is a function, representing a network (e.g., 921), that when fed with *ŷₖ* and *x*"_{*k*+1}, it predicts *xₖ* , resulting in the synthesized image *x'ₖ*.

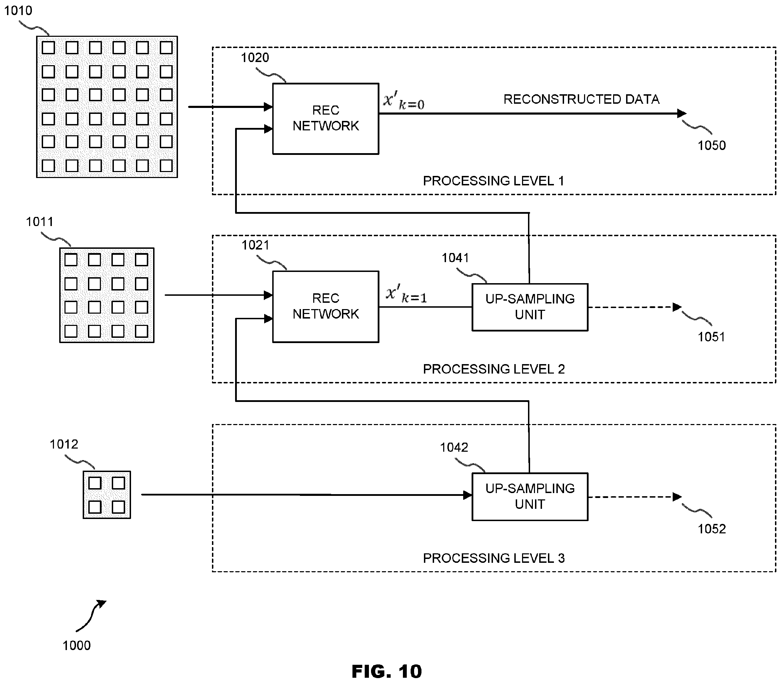

FIG. 10 is a block diagram illustrating a second configuration of a hierarchical INR network 1000. This configuration 1000 is a variant of the first configuration 900, where, for at least one layer, processed by the lowest resolution processing level (processing level 3) or by an intermediate resolution processing level (processing level 2), the latent variables of that layer are not processed by a network. The latent variables of such layer may be directly up-sampled by an up-sampling unit before being fed to the input of a network of the next processing layer. The case where, for a layer, processed by the lowest resolution processing level (processing level 3), the latent variables of that layer are not processed by a network is illustrated by FIG. 10.

Referring to FIG. 10, starting with processing level 3, the lowest resolution layer 1012 of latent variables, *ŷ*_{*k*=2} , may be upsampled, by the up-sampling unit 1042, to a resolution level of the next processing level 2. Continuing with processing level 2, the intermediate resolution layer 1011 of latent variables, *ŷ*_{*k*=1} , may be fed into reconstruction network 1021. This network 1021 may be trained to predict, based on *ŷ*_{*k*=1} and the upsampled version of *ŷ*_{*k*=2} , the input image at the intermediate resolution level, *x'*_{*k*=1} . The output of this network 1021, *x*'_{*k*=1} , may be upsampled, by the up-sampling unit 1041, to a resolution level of the next processing level 1, resulting in *x"*_{*k*=1} . Continuing with processing level 1, the highest resolution layer 1010 of latent variables, *ŷ*_{*k*=0} , may be fed into reconstruction network 1020. This network 1020 may be trained to predict, based on *ŷ*_{*k*=0} and *x"*_{*k*=1}, the input image at the full (native) resolution level, *x'*_{*k*=0} , that is, the reconstructed image 1050. In an aspect, the up-sampling units 1041, 1042 can be implemented by respective neural networks.

In an aspect, only some layers of the latent variables may be processed by a hierarchical INR network. For example, given K layers of latent variables, in a first stage, layers [0, *k*₁] may be processed together (as described with respect to the up-scaling unit 640, 740, and the INR network 650, 750 of FIG. 6 and FIG. 7); and, in a second stage, the remaining layers [(*k*₁ + 1), *(K -* 1)] may be processed in a hierarchical manner applying a hierarchical INR network (e.g., 900, 1000). Or vice versa, in a first stage, layers [0, *k*₁] may be processed in a hierarchical manner and, in a second stage, the remaining layers [(*k*₁ + 1), *(K* - 1)] may be processed together. In this aspect, the output of the first stage may feed the input of the second stage.

According to aspects, the reconstruction of the input data, *x*, can be partial. For example, in a case where further processing does not provide significant added value, processing may not be continued into the next processing level. Thus, processing by a hierarchical INR network 900, 1000 can be limited to fewer processing levels. In an aspect, a control signal (e.g., fed into the up-sampling units) may be used to indicate whether processing should be continued into the next level of processing. In a case where processing should not be continued into the next level, for example, a synthesized image *x'ₖ* may be scaled up to match the scale of the input image x and that upscaled image can be provided as the reconstructed data.

A control signal, indicating at what processing level to conclude the reconstruction of the input data, may be triggered by information indicating a reconstruction level determined by an encoder 600. To that end, at the encoder 600, intermediate results (e.g., generated by processing levels 2-3) may be evaluated to provide a criterion based on which reconstruction may be stopped. For example, such a criterion may result in a score, and so, a processing level whose score is not (significantly) improved by the next processing level would be the last processing level to be applied, during reconstruction, by the decoder 700. This last processing level (corresponding to the highest resolution level of data to be reconstructed) can be signaled to the decoder in the bitstream (or via other means). In an aspect, networks' parameters and layers of latent variables that correspond to processing levels beyond the last processing level need not be coded into the bitstream. Determining a last processing level - that is, a reconstruction level - provides the benefit of decreasing decoding time and better adapting a hierarchical INR network to the content.

Scores, evaluating intermediate results (generated by respective processing levels), may be determined based on a distortion (fidelity measure), rate (resulted bitrate), a peak signal-to-noise ratio (PSNR), and/or a computational complexity associated with a respective processing level. The scores may be used to select a reconstruction level, identifying a maximum level of resolution at which the input data is to be reconstructed. The reconstruction level may be determined, by the encoder, before transmission, and thus only layers of latent variables processed by and parameters of networks applied by processing levels up to the reconstruction level need to be coded into the bitstream. Alternatively, or in addition, the scores may be transmitted to the decoder and may be used, at decoding time, to determine a reconstruction level. In this case, layers of latent variables processed by and parameters of networks applied by all processing levels may be coded into the bitstream. In an aspect, the reconstruction level may be determined based on a requirement for a maximum allowed coding cost (e.g., based on rate-distortion assessment), a requirement made by a user or made automatically by the encoder.

The following syntax elements may be coded into the bitstream 670, 710, to support aspects described herein.

A syntax element, namely, **hierarchical_INR_network_configuration,** may be coded into the bitstream to indicate a configuration of the hierarchical INR network (e.g., one of configurations 900, 1000, or any variant therefrom). This syntax element may further indicate the architecture of networks employed at each processing level. In an aspect, the architecture of networks used by a hierarchical INR network can be adapted for a given scale. Networks applied at lower resolution processing levels may have a simple architecture, since information processed in these levels may be less detailed (i.e., low frequency content); while networks applied at higher resolution processing levels may have a more complex architecture, since information processed in these levels is more detailed (i.e., high frequency content). For example, networks 920 or 1020 may include more layers and more nodes in each layer, compared with networks 921 or 1021, respectively.

A syntax element, namely, **reconstruction_level_info,** may be coded into the bitstream, providing information indicating a reconstruction level. In an aspect, a syntax element, namely, **index_determined_reconstruction_level,** may be coded into the bitstream to indicate the index of the highest resolution level that is required for the reconstruction. This value may be encoded by 4 bits, allowing up to 32 resolution levels. That is, an input image x may be decomposed (e.g., using a Gaussian pyramid-based decomposition) into up to 32 levels of resolution and may be represented by up to 32 layers of latent variables. This index may also indicate the number of transmitted layers of latent variables. It may also inform the decoder about the network structure, indicating information such as the number of processing layers required for reconstruction or for recovering the input image at its full (native) resolution level.

A syntax element, namely, **total_latent_layer,** may be coded into the bitstream to indicate the total number of layers of latent variables that are required for reconstruction of the input image at its full (native) resolution level. If this information is already known to the decoder (e.g., it was previously transmitted), this syntax element may not be required.

A syntax element, namely, **upsampling_type,** may be coded into the bitstream to indicate a recommended type of interpolation that may be used by the up-sampling units of a hierarchical INR network. For example, this value may be encoded by 4 bits, where '0' specifies an interpolation of type bicubic, '1' specifies an interpolation of type bilinear, '2' specifies an interpolation of type Lanczos, '3' specifies that the interpolation has been trained, and '4' to '15' may be reserved for future uses. Alternatively, or in addition, one or more syntax elements may be coded into the bitstream to indicate recommended types of interpolation for respective up-sampling units.

A syntax element, namely, **final_scaling_factor,** may be coded into the bitstream to indicate a scaling factor to apply to an intermediate output - generated by a processing level corresponding to the determined reconstruction level - for scaling up the intermediate output to the full (native) resolution of the input data. For example, this value may be encoded by 4 bits, allowing scaling up to a factor of 32. It may also be encoded as an exponent of a power of 2, allowing scaling up to a factor of 2^32. In a case where the size of the image is already known to the decoder (e.g. it was previously transmitted), this syntax element may not be required.

The following steps may be carried out to encode input data by an encoder 600 applying a hybrid NR network that uses a hierarchical INR network (e.g., 900 or 1000).

To begin the encoding process, we may first initialize the latent variables. The number of layers, K, and the number of latent variables in each layer may be determined. The latent variables may be set to zero or may be initialized based on characteristics (e.g., texture, color, or statistics such as mean and/or variance) of the input signal, x, they represent.

Following initialization, the Hybrid INR model is trained. Training may be carried out to determine the final result - that is, the values of the latent variables of layers used, ŷ, and the parameters, *θ* and ψ, of networks used. Hence, the training may involve minimizing the following coding cost: ${min}_{\hat{y} , θ , ψ} Cost = {min}_{\hat{y} , θ , ψ} \left(D\left(x,{f}_{θ}\left(\hat{y}\right)\right)+λR\left(\hat{y}, θ, ψ\right)\right) .$ (12) In an aspect, the model may be trained to minimize a coding cost with respect to an intermediate result, *(ŷₖ*, *θₖ*, *ψₖ* ), expressed as: ${min}_{\hat{y} , θ , ψ} Cost = {min}_{\hat{y} , θ , ψ} \left({D}_{k}\left(x,{f}_{{θ}_{k}}\left({\hat{y}}_{k}\right)\right)+λR\left({\hat{y}}_{k}, {θ}_{k}, {ψ}_{k}\right)\right) ,$ (13) where *f_{θₖ}(ŷₖ*) is an intermediate result, and where *R(ŷₖ*, *θₖ*, *ψₖ* ) is the rate associated with the intermediate result. For example, an intermediate result may be generated by an intermediate processing level (such as, 951, 1051). In an aspect, the model may be trained to minimize a combination of a coding cost with respect to at least one intermediate result (e.g., using equation 13) and a coding cost of the final result (e.g., using equation (12)). In an aspect, only the distortion, D, or only the rate, R, may be used to express the coding cost.

In an aspect, when the first configuration of the hierarchical INR network 900 is used, the training involves determining the value of the latent variables 910, 911, 912, and the parameters of the networks 620, 920, 921, 922. In this case, the distortion defined in equation (11) may be used. In another aspect, when the second configuration of the hierarchical INR network 1000 is used, the training involves determining the value of the latent variables 1010, 1011, 1012, and the parameters of the networks 620, 1020, 1021. In this case, the distortion defined in equation (11) for *k* = 0 to *k = K* - 2 may be used.

Next, a reconstruction level is determined. The reconstruction level facilitates partial reconstruction or coarse to fine (progressive) reconstruction of the input data. To that end, intermediate reconstructions of the input data may be generated. To obtain intermediate reconstructions, intermediate results (e.g., processing level outputs 951-952 or 1051-1052) may be scaled up to match the full (native) resolution of the input data. (In the case of configuration 1000, latent variables of a layer that is not processed by a network (e.g., layer 1012) may be further fed into a reconstruction network to obtain a respective intermediate reconstruction.) Then, a coding cost may be computed for each of these intermediate reconstructions. The processing level with the lowest coding cost may be determined as the reconstruction level. In a variant, the coding costs may be computed before or after the up-sampling unit (e.g., 941 or 1041) is employed. In an aspect, the intermediate reconstructions may be evaluated based on other criteria (e.g., distortion, rate, a PSNR, and/or computational complexity) to determine a score based on which the reconstruction level may be determined.

The latent variables, network parameters, and syntax elements are then coded into the bitstream. Latent variables of active layers - that is, layers with respective resolution levels that are up to (and including) the reconstruction level - are coded into the bitstream (e.g., using the entropy coder 630). Note that data associated with processing levels that are above the reconstruction level may be discarded. Parameters, *θ*, of networks used to process data from active layers are coded into the bitstream, as well as parameters of the PP network, ψ (e.g., using entropy coders 625, 655). Syntax elements describing the operation of the hierarchical INR network are also coded into the bitstream. This may include syntax elements indicating a configuration of the used hierarchical INR network, a reconstruction level, a total number of layers of latent variables, up-sampling method(s), and/or a scaling factor.

The following steps may be carried out to reconstruct (decode) the input data by a decoder 700 applying a hybrid NR network that uses a hierarchical INR network (e.g., 900 or 1000).

To begin the decoding process, syntax elements describing the operation of the hierarchical INR network are decoded from the bitstream. This may include syntax elements indicating a configuration of the hierarchical INR network, a reconstruction level, a total number of layers of latent variables, up-sampling method(s), and/or a scaling factor. Then, network parameters, *θ* (coded into the bitstream) are decoded, as well as the parameters of the PP network, ψ (e.g., using entropy decoders 715, 755). In an aspect, some of the parameters of some of the networks may be available from another source or may be already obtained with respect to previously processed input data (e.g., previously processed frames of a video stream). Next, the latent variables (coded into the bitstream) are decoded from the bitstream (e.g., using the entropy decoder 725 and the PP network 720).

Then, output data (reconstructed input data) is produced by the hierarchical INR network 900, 1000. The hierarchical INR network received the decoded layers of latent variables 910-912, 1010-1012 and outputs a reconstructed input data. When a partial reconstruction is employed, the input data may be reconstructed at a level of resolution that corresponds to the reconstruction level (determined by or provided to the decoder) and may be further scaled up to match the full resolution of the input data. In reference to FIG. 9, if, for example, the reconstruction level corresponds to processing level 2, the output of this level 951 can be used to provide the reconstructed data (after up-scaling it into a full resolution). The output of a lower level 952 can be used to reconstruct a coarser version of that reconstructed data. Accordingly, reconstruction can be performed in a progressive manner, starting with a coarse reconstruction (based on the output of the lowest resolution level (e.g., processing level 3 in FIGS 9-10), and then refining that reconstruction progressively based on the outputs of intermediate processing levels (e.g., processing level 2 in FIG. 9-10) up to a maximum processing level determined by the given construction level.

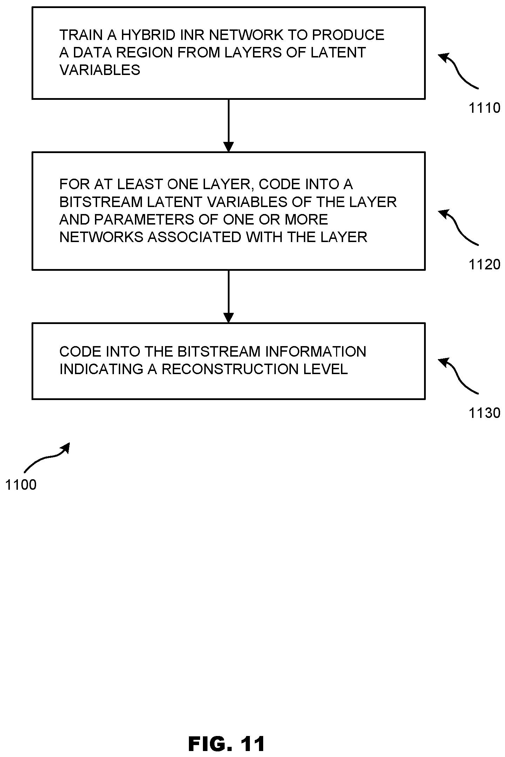

FIG. 11 is a flowchart of an example method for encoding data 1100. The method 1100 encodes, into a bitstream, a data region of a currently encoded frame. The method 1100 may include steps 1110 to 1130. In step 1110, a hybrid INR network may be trained to produce the data region from layers of latent variables. Thus, for each layer, the training may include determining, based on a respective coding cost, latent variables of the layer and one or more networks associated with the layer. Next, in step 1120, for at least one layer, the latent variables of that layer and the parameters of one or more networks associated with that layer may be coded into the bitstream. Additionally, in step 1130, information indicating a reconstruction level may be coded into the bitstream. In an aspect, only layers with respective resolution levels that are up to a maximum level of resolution (as determined by the information indicating a reconstruction level) may have their latent variables and the parameters of their associated one or more networks coded into the bitstream.

In an aspect, for each layer of latent variables, the training of the hybrid INR network includes computing a coding cost associated with that layer. The coding cost associated with a layer may be computed based on 1) latent variables of the layer, 2) parameters of the one or more networks associated with the layer, and 3) a representation of the data region at a resolution level of the layer (e.g., see equation (13)). These coding costs may be used to compute scores for respective layers. In an aspect, the information that indicates a reconstruction level (coded into the bitstream) may include these scores. In another aspect, a maximum level of resolution at which the data region is to be reconstructed by a decoder may be determined based on the coding costs, and information indicating a reconstruction level (coded into the bitstream) may include that determined maximum level of resolution.

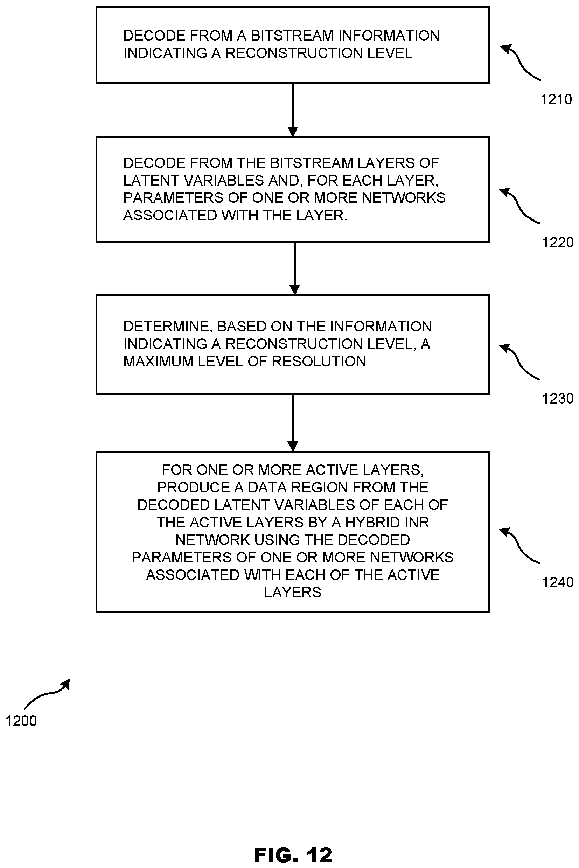

FIG. 12 is a flowchart of an example method for decoding data 1200. The method 1200 decodes, from a bitstream, a data region of a currently decoded frame. The method 1200 may include steps 1210 to 1240. In step 1210, information indicating a reconstruction level is decoded from the bitstream. In step 1220, layers of latent variables and, for each layer, parameters of one or more networks associated with that layer may be decoded from the bitstream. Next, based on the information indicating a reconstruction level, in step 1230, a maximum level of resolution may be determined. Then, for one or more active layers (that is, layers with respective resolution levels that are up to the determined maximum level of resolution), in step 1240, the data region is produced, from the decoded latent variables of each of the active layers by a hybrid INR network using the decoded parameters of one or more networks associated with each of the active layers. In an aspect, the information indicating a reconstruction level (decoded from the bitstream) includes scores computed, by an encoder, based on coding costs associated with respective layers, and the maximum level of resolution is determined based on these scores.

According to aspects, the method 1200 includes decoding from the bitstream syntax elements informing a partial and/or progressive reconstruction of the data region. In a first aspect, a syntax element, decoded from the bitstream, indicates a configuration of the hierarchical INR network 900, 1000 applied by the hybrid INR network, where the configuration determines an architecture of the one or more networks associated with each of the layers. In a second aspect, a syntax element, decoded from the bitstream, indicates a total number of layers of latent variables that are required to produce the data region at a full resolution level. In a third aspect, a syntax element, decoded from the bitstream, indicates a type of interpolation to be used for up-sampling data generated by one or more networks associated with a layer. In a fourth aspect, a syntax element, decoded from the bitstream, indicates a scaling factor to be used for scaling up data, generated by one or more networks associated with a layer, to match the scaled data to a full resolution level of the data region.

The illustrations of the aspects described herein are intended to provide a general understanding of the structure, function, and operation of the various aspects. The illustrations are not intended to serve as a complete description of all of the elements and features of apparatuses and systems that utilize the structures or methods described herein. Many other aspects may be apparent to those of skill in the art upon reviewing the disclosure. Other aspects may be utilized and derived from the disclosure, such that structural and logical substitutions and changes may be made without departing from the scope of the disclosure. Accordingly, the disclosure and the figures are to be regarded as illustrative rather than restrictive.

The description of the aspects is provided to enable the making or use of the aspects. Various modifications to these aspects will be readily apparent, and the generic principles defined herein may be applied to other aspects without departing from the scope of the disclosure. Thus, the present disclosure is not intended to be limited to the aspects shown herein but is to be accorded the widest scope possible consistent with the principles and novel features as defined by the following claims.

## Claims

1. A method, comprising:
encoding, into a bitstream, a data region of a currently encoded frame, the encoding comprises:
training a hybrid INR network to produce the data region from layers of latent variables, wherein, for each layer, the training includes:
determining, based on a respective coding cost, latent variables of the layer and one or more networks associated with the layer;
for at least one layer,
coding, into the bitstream, latent variables of the layer and parameters of one or more networks associated with the layer; and
coding, into the bitstream, information indicating a reconstruction level.

2. A method, comprising:
decoding, from a bitstream, a data region of a currently decoded frame, the decoding comprises:
decoding, from the bitstream, information indicating a reconstruction level;
decoding, from the bitstream, layers of latent variables and, for each layer, parameters of one or more networks associated with the layer;
determining, based on the information indicating a reconstruction level, a maximum level of resolution; and
for one or more active layers, being with respective resolution levels that are up to the determined maximum level of resolution, producing the data region from the decoded latent variables of each of the active layers by a hybrid INR network using the decoded parameters of one or more networks associated with each of the active layers.

3. An apparatus, comprising:
at least one processor; and
memory storing instructions that, when executed by the at least one processor, cause the apparatus to encode, into a bitstream, a data region of a currently encoded frame, the encoding comprises:
training a hybrid INR network to produce the data region from layers of latent variables, wherein, for each layer, the training includes:
determining, based on a respective coding cost, latent variables of the layer and parameters of one or more networks associated with the layer,
for at least one layer,
coding, into the bitstream, latent variables of the layer and parameters of one or more networks associated with the layer, and
coding, into the bitstream, information indicating a reconstruction level.

4. An apparatus, comprising:
at least one processor; and
memory storing instructions that, when executed by the at least one processor, cause the apparatus to decode, from a bitstream, a data region of a currently decoded frame, the decoding comprises:
decoding, from the bitstream, information indicating a reconstruction level, decoding, from the bitstream, layers of latent variables and, for each layer, parameters of one or more networks associated with the layer,
determining, based on the information indicating a reconstruction level, a maximum level of resolution, and
for one or more active layers, being with respective resolution levels that are up to the determined maximum level of resolution, producing the data region from the decoded latent variables of each of the active layers by a hybrid INR network using the decoded parameters of one or more networks associated with each of the active layers.

5. The method according to claim 1, or the apparatus according to claim 3, wherein: the at least one layer is with respective resolution levels that is up to a maximum level of resolution determined by the information indicating a reconstruction level.

6. The method according to claim 1, or the apparatus according to claim 3, wherein, for each layer, the training includes:
computing the respective coding cost based on:
latent variables of the layer,
parameters of the one or more networks associated with the layer, and
a representation of the data region at a resolution level of the layer.

7. The method according to claim 6 further comprising, or the apparatus according to claim 6 wherein the instructions further cause the apparatus to perform:
computing, based on the coding costs, scores for respective layers, wherein the information indicating a reconstruction level includes the scores.

8. The method according to claim 6 further comprising, or the apparatus according to claim 6 wherein the instructions further cause the apparatus to perform:
determining, based on the coding costs, a maximum level of resolution at which the data region is to be reconstructed by a decoder, wherein the information indicating a reconstruction level includes the maximum level of resolution.

9. The method according to claim 1 further comprising, or the apparatus according to claim 3 wherein the instructions further cause the apparatus to perform:
determining a configuration of a hierarchical INR network applied by the hybrid INR network, wherein, for each of the layers, the configuration determines an architecture of one or more networks associated with the layer.

10. The method according to claim 9, or the apparatus according to claim 9, wherein the architecture of one or more networks associated with the layer is determined based on a resolution level of the layer.

11. The method according to claim 2, or the apparatus according to claim 4, wherein:
the information indicating a reconstruction level includes scores computed, by an encoder, based on coding costs associated with respective layers, and
the maximum level of resolution is determined based on the scores.

12. The method according to claim 2 or 11 further comprising, or the apparatus according to claim 4 or 11 wherein the instructions further cause the apparatus to perform:
decoding from the bitstream a syntax element indicating a configuration of a hierarchical INR network applied by the hybrid INR network, wherein, for each of the layers, the configuration determines an architecture of the one or more networks associated with the layer.

13. The method according to any one of claims 2 or 11-12 further comprising, or the apparatus according to any one of claims 4 or 11-12 wherein the instructions further cause the apparatus to perform:
decoding from the bitstream a syntax element indicating a total number of layers of latent variables that are required to produce the data region at a full resolution level.

14. The method according to any one of claims 2 or 11-13 further comprising, or the apparatus according to any one of claims 4 or 11-13 wherein the instructions further cause the apparatus to perform:
decoding from the bitstream a syntax element indicating a type of interpolation to be used for up-sampling data generated by one or more networks associated with a layer.

15. The method according to any one of claims 2 or 11-14 further comprising, or the apparatus according to any one of claims 4 or 11-14 wherein the instructions further cause the apparatus to perform:
decoding from the bitstream a syntax element indicating a scaling factor to be used for scaling up data, generated by one or more networks associated with a layer, to match the scaled data to a full resolution level of the data region.
